# EUROPEAN PATENT SPECIFICATION

(11) **EP 1 583 655 B1**
(45) Date of publication and mention of the grant of the patent: **25.07.2007**
(21) Application number: 03789651.1
(22) Date of filing: 23.12.2003
(51) Int. Cl.: B29D 30/42

(54) **DEVICE AND METHOD FOR PRODUCING A BREAKER PLY**
VORRICHTUNG UND VERFAHREN ZUR HERSTELLUNG EINES VERSTÄRKUNGSGÜRTELS FÜR REIFEN
DISPOSITIF ET PROCEDE DE FABRICATION D'UNE NAPPE DE RENFORCEMENT DE LA BANDE DE ROULEMENT

(30) Priority: 23.12.2002 NL 1022246
(43) Date of publication of application: 12.10.2005
(73) Proprietor: VMI EPE HOLLAND B.V., NL-8161 RK Epe (NL)
(72) Inventor: GUTKNECHT, Heinz, NL-8161 AT Epe (NL)
(74) Representative: De Hoop, Eric
(86) International application number: PCT/NL2003/000926
(87) International publication number: WO 2004/056558

(56) References cited:
- EP-A- 0 904 959
- EP-A- 1 095 761
- EP-A- 1 211 058
- US-A- 1 960 822
- US-A- 3 071 179
- US-A- 4 877 468
- US-A- 5 571 354

## Description

The invention relates to a device and method for making a breaker ply or belt layer having a longitudinal axis, a breaker length and mutually parallel cords at a pre-set cord angle to the longitudinal axis.

A process for making breakers for car tyres used at the moment is as follows. First a broad strip-is made of unvulcanized rubber in which cords are incorporated in .the longitudinal direction. The strip, which is approximately 800-1600 mm wide, is cut at an angle to the cords, the cord angle, so that parallelogram-shaped bands are created in which cord parts are incorporated. In a so-called splicer the bands are spliced together with their sides butted to each other and the cord parts parallel to each other (butt spliced) into a long strip having diagonal cord parts at a cord angle to the longitudinal direction of the strip. Said long strip is subsequently wound onto a roll and stored for use.

When building tyres, a roll is taken and placed on an unwinding trestle and is unwound. A cutting device cuts the strip parallel to the cord parts into breaker plies (or belt layers) having a breaker ply length adjusted to the tyre to be made. The breaker plies are transported to a building drum and wound onto it, in general two layers are arranged having mutually crossed cord directions so that a breaker or breaker package (belt) is created.

A drawback of this method among other things is that a stock of rolls has to made. However, because the rubber is unvulcanized, and has to retain a good adhesion and therefore may not dry out or age, the roll cannot be stored too long. In addition the bands first have to be spliced together into a continuous strip, which usually at a later moment after unrolling has to be cut again very accurately into breaker plies. Errors and inaccuracies may occur due to these actions. Additionally a roll is suitable for one width size of a tyre only.

From US-A1-3.888.713 a device is known for making a breaker ply, using an extrusion device by which means a continuous cord-reinforced strip can be produced having cords oriented in the longitudinal direction of the strip. The strip is subsequently cut into bands by a cutting device, which bands are placed adjacent to each other and are subsequently spliced into a strip.

Additionally EP-A1-1211058 describes a device for making a breaker ply. Here an extrusion device produces a continuous rubber strip having embedded longitudinal cords. From said continuous rubber strip bands are cut by cutting diagonally at the cord angle to the longitudinal cords. The bands are placed adjacent to each other on a surface, wherein the longitudinal axis of a thus formed strip is at a cord angle to the direction of the longitudinal cords. Subsequently the formed strip is picked up and placed on a conveyor belt which has a transport direction that is in line with the direction of the longitudinal cords. The strip is spliced there to an already present continuous strip. From said continuous strip, breaker plies are cut further on in the process, which breaker plies are transported to the building drums and wound onto it into a breaker. Because the cutting results in delays, a buffer loop is present in front of the cutting device.

In the described process loops are necessary to counterbalance the differences in speed, as a result of which deformations may arise. In addition many actions have to be carried out with vulnerable strips, and various cutting steps are necessary.

From EP-A2-1.095.761 a method and device are furthermore known for making a breaker ply from bands that are cut from a continuous strip that comes out of an extrusion device, which largely corresponds to the method and device as described in US-A1-3.888.713. In order to create a breaker ply from a whole number of bands it seems that EP-A2-1.095.761 choose to adapt a distance or overlap between the trailing end of a previous band and the leading part of a next band such that the breaker ply consists of a whole number of bands. A drawback of this method is that an unequal distribution of weight around the final tyre may be created. An unequal distribution of weight which may moreover be periodical, so that the final tyre is susceptible to resonance.

For building a tyre usually two, almost identical, breaker plies are necessary, wherein the one after the other is arranged around a building drum such that the cords are at an angle. The quick manufacturing and arranging of said almost identical breaker plies is a problem.

It is an object of the invention to improve on this.

To that end the invention provides a device for producing a breaker ply comprising the features recited in claim 1.

The invention furthermore provides a method for producing a breaker ply comprising the features recited in claim 16. Preferred embodiments of the invention are defined in the dependent claims.

By selecting an integrated assembly as suggested according to the invention a highly accurate and fast production of breaker plies and processing thereof without stock control problems is possible. An optimal process is possible wherein the entire build-up of the breaker ply from start to finish can be checked and controlled. Additionally, the production can be changed to another tyre size almost immediately.

The longitudinal cords in the continuous rubber strip in the end form the cords in the breaker ply. Said cords may be metal (particularly steel) cords or cords made of polymer material (synthetic fibre), such as Twaron, polyester of nylon, or cords of for instance cellulose. The cords may also be monofilaments of these materials. The cord angle can be set between 0 and 90 degrees to the longitudinal axis of the breaker ply. In practice the cords will have a cord angle of approximately 13-45 degrees, specifically approximately 18-32 degrees.

The second transport device is provided with a first drive and a control device for controlling the first drive, wherein the control device is adapted for controlling the drive for adaptably moving the support surface of the second transport device with a transfer distance that can be set for positioning the next band, or a transport distance for transporting the breaker ply towards the building drum. Thus it is possible to place the bands that have been cut from the continuous rubber strip at a mutually adjustable distance from each other on the support surface of the second transport device. The control device comprises a memory for the strip width and the breaker ply length, the centre-to-centre distance between the longitudinal cords, and a calculating unit for calculating a band number, being the necessary number of bands to form a breaker ply, and the transfer distance from the centre-to-centre distance, the strip width and the breaker ply length. As a result the breaker ply under construction can be very accurately transferred and each time a new band can be positioned in a highly reproducible manner in the breaker ply under construction. Due to an accurate setting of the distance between the breaker ply under construction and the bands, possible corrections may be carried out.

In an embodiment thereof the control device comprises a counter for counting the number of bands placed, and a decision routine for deciding to transport the breaker ply to the building drum when the number of bands placed equals the band number, or when the breaker ply length has been reached.

In an embodiment of the invention the device further comprises a measuring unit for measuring the length of the breaker ply on the support surface of the second transport device during making the breaker ply, connected to the control device. Said measuring unit preferably is capable of measuring without contact. Preferably the measuring unit is a CCD camera with which each time when a band is added a recording is made in order to check the production process and if so desired control/adjust? it. The measuring unit may also be line scan camera. In an embodiment thereof the measuring unit is connected to the control device, wherein the control device is adapted for setting the transfer distance based on the measured length during manufacturing, the set breaker ply length and the centre-to-centre distance between the longitudinal cords. Preferably the shape of the breaker ply under construction is each time measured when a band has been positioned, so that possible deviations are established at an early stage and may possibly even be remedied.

By means of the above-mentioned embodiment it is possible to adjust the breaker ply length during the production of the breaker ply. During production it may for instance become clear from measurements of the length of the breaker ply length during manufacturing the breaker ply, that the final breaker ply will not get the correct dimension. This can now be corrected by adjusting the mutual distance of the bands. Said correction then takes place by the adjusting the transfer of the support surface of the first transport device. In practice approximately 20-30 bands, each being 25-50 mm wide, will be used for a breaker ply. In an ideal case the bands will exactly abut each other, the cord distance (centre-to-centre) will be constant and the breaker ply will be built up from a whole number of bands.

The distance between each band will at the most approximately equal the centre-to-centre distance between the longitudinal cords, i.e. approximately 1 mm, when the outer cords are situated exactly along the edge of a band.

By for instance increasing said centre-to-centre distance by 10%, a breaker ply will become approximately 2-3 mm longer, and by reducing said distance by approximately 10% said breaker ply will become approximately 2-3 mm shorter. The adjustment is then distributed over the later tyre circumference, as a result of which no to little imbalances in the weight distribution of the final tyre will occur. Additionally the bands can of course be placed highly accurately, and the production process can be continuously monitored.

In an embodiment of the device according to the invention the first transport device furthermore comprises a placement device for picking up the continuous rubber strip or bands from the first transport device and placing it or them on the support surface of the second transport device.

In an embodiment thereof the placement device is positioned after the cutting device for placing the continuous rubber strip or band on the support surface.

In a further development thereof the placement device is provided with a splicer for splicing the bands together into a breaker ply.

In an embodiment of the device according to the invention the second transport device comprises a transfer device for transferring the support surface to the building drum for placing the breaker ply against the building drum.

A simple realisation of the device is achieved by opting for conveyor belts for the transport devices. Thus if so desired different conveyor belts can be deployed to realise a transport device. Preferably toothed belts are used so that transfer can be accurately set.

In yet another embodiment of the device according to the invention the second transport device comprises a first conveyor and a second conveyor, wherein the conveyors are positioned with their transport directions in line, wherein the first conveyor comprises a support surface for receiving the bands or continuous rubber strip and a drive to the control device.

In a further embodiment thereof the second conveyor comprises a support surface for supporting the breaker ply, wherein the support surface of the second conveyor is movable from a first position, in which the support surface of the first conveyor lies in line with the support surface of the second conveyor, to a second position, in which the support surface rests against the building drum.

The invention furthermore relates to an assembly for manufacturing a breaker for a tyre, comprising two devices for manufacturing a breaker ply as described above, for almost simultaneously manufacturing two breaker plies, wherein the second transport devices of the devices for manufacturing a breaker ply, with their transport directions are positioned substantially parallel to each other.

This results in an arrangement in which in a short period of time, particularly within approximately one minute, a complete breaker can be manufactured, wherein the breaker plies are not exposed to deformations, due to which the chances of errors and damages are reduced. Moreover smaller series can be made.

In an embodiment of said assembly the building drums of the first and second device for manufacturing a breaker ply, with their axes of rotation are positioned substantially in line, and are mounted on a building drum holder so as to be jointly rotatable about an axis substantially perpendicular to the axis of rotation. As a result the breaker plies can be simply arranged with crossed cord layers, without the breaker plies being exposed to further actions. Moreover time is gained.

In a further embodiment the extrusion devices of both devices for manufacturing a breaker ply, with their extrusion devices are positioned substantially parallel to each other. In a further embodiment thereof the extrusion devices are mutually connected, and the angle between the extrusion devices and the second transport devices can be set. As a result the cord angle can be set quickly and correctly. In an embodiment the first transport devices with their transport directions are positioned almost parallel. As a result a compact setup is possible. In an embodiment thereof the transport directions of the first transport devices can be set.

In yet a further embodiment the second transport devices of both devices for manufacturing a breaker ply each comprise a support surface for supporting and transferring a breaker ply, wherein both support surfaces are movable to the building drums of the respective devices for manufacturing a breaker ply, wherein one support surface is movable to the upper side of the building drum for arranging a breaker ply on the upper side of the building drum, and the other support surface is movable to the lower side of the other building drum for arranging a breaker ply on the lower side of said building drum.

In a further embodiment of the device according to the invention it furthermore comprises a third transport device, of which the transport direction is substantially parallel to the transport direction of the second transport device, and a second cutting device for cutting the continuous rubber strip parallel to the first cutting device. As a result one extrusion device that may provide the second and third transport device with bands may suffice. In an embodiment an extrusion device may furthermore be provided for simultaneously producing two continuous strips so that this device is able to almost simultaneously produce two breaker plies.

In an embodiment thereof the second cutting device is arranged for cutting between the second and third transport device. As a result two breaker plies can be made by means of one extrusion device.

In an embodiment the third conveyor comprises a support surface for a breaker ply, situated adjacent to and consecutive to the support surface of the second conveyor.

An embodiment of the device according to the invention is furthermore provided with a main operation device, wherein the main operation device comprises a memory and a data processing unit, and software for reading a set centre-to-centre distance between the longitudinal cords and the breaker ply length.

In an embodiment thereof the software is provided with a distance routine for calculating the target mutual distance between the bands from the band width, the centre-to-centre distance between the longitudinal cords and the target length of the breaker ply.

In an embodiment thereof the software is furthermore provided with operation routines for operating the placement device for transferring a partly formed breaker ply, wherein the transfer is calculated by means of the distance routine for calculating the mutual distance between the bands.

In an embodiment of the method according to the invention, a predetermined mutual centre-to-centre distance of the cords and the width of the continuous strip is set, the length of the breaker ply is measured during manufacturing, and the mutual distance of the bands is each time adjusted for realising a pre-set breaker ply length, wherein the adjustment of the mutual distance at the most is the centre-to-centre distance of the cords, preferably at the most 20% of the centre-to-centre distance.

In a further embodiment of this method the centre-to-centre distance and the target length of the breaker ply are entered into a computer provided with operation software, wherein the operation software calculates the distance that may be necessary between the bands.

In an embodiment thereof the operation software regulates the transfer of an already formed part of the breaker ply.

The invention furthermore relates to a method for building a breaker ply, wherein a continuous rubber strip provided with cords is produced in the longitudinal direction by means of a continuous extrusion process, the continuous strip is cut into bands at a cord angle, the bands are placed adjacent to each other on a support surface at a mutual band distance in order for several bands together to form a breaker ply having a pre-set length, the breaker ply on the support surface is transported to a building drum and is wound onto the building drum, wherein the mutual band distance is determined once again for each band of the breaker ply.

In an embodiment of thereof the building drum after arranging a first breaker ply is rotated about an axis perpendicular to the axis of rotation of the drum.

In an embodiment thereof the building drum is rotated in the horizontal plane.

In an embodiment of the said method a second breaker ply is arranged over the first breaker ply, wherein the cords of the first and second breaker ply are crossed with respect to each other.

In an embodiment thereof the first and second breaker ply are supplied to the building drum with the cord angle in the same direction, wherein the first breaker ply is secured at the upper side of the building drum and is wound around the building drum, and the second breaker ply is secured at the lower side of the building drum and is wound around the building drum in opposite direction.

In an embodiment of the above-mentioned devices the support surfaces of the transport devices are provided with retaining units for retaining the breaker plies or breaker plies under construction onto the support surfaces. For an efficient action said retaining units can be switched on and off. Examples of such retaining units are magnets or vacuum units, for instance suction cups. It is preferred here that the support surfaces are provided with perforations and with pumps underneath the support surfaces for creating a vacuum, as a result of which the breaker plies are sucked onto the support surfaces.

The invention furthermore relates to a device for almost simultaneously producing at least two breaker plies for a belt, wherein each breaker ply has a longitudinal axis, a breaker ply length and mutually parallel cords at a pre-set cord angle to the longitudinal axis, wherein the device comprises:
- an extrusion device for producing at least one continuous rubber strip having substantially mutually parallel embedded longitudinal cords having a centre-to-centre distance and having a strip width;
- at least two cutting devices for diagonally at a cord angle cutting bands from the continuous strip along a cutting line, wherein the cutting devices are positioned with their cutting lines practically parallel;
- at least one strip transport device for transporting the continuous rubber strip substantially in the direction of the longitudinal cords;
- a second and third transport device, each for transporting a breaker ply substantially in the longitudinal direction of the breaker ply in a transport direction, each comprising a support surface for the breaker ply, and positioned with their transport directions substantially parallel;
- at least one building drum having an axis of rotation, for receiving a breaker ply coming from the second transport device and a breaker ply coming from the third transport device,
wherein the strip transport device is adapted for transporting the continuous strip to the second and third transport device, the second and third transport device are positioned with their transport direction at an angle the size of the cord angle to the direction of the longitudinal cords, the longitudinal direction of the breaker plies substantially corresponds to the transport direction, and the building drum with its axis of rotation is positioned substantially transverse to the second and third transport direction.

A relatively compact arrangement is suggested for quickly producing a breaker. Moreover only one building drum and one extrusion device needs to be used in order to yet make a high productivity possible.

In an embodiment the extrusion device is adapted for simultaneously producing at least two rubber strips. Thus one extrusion device having one extrusion head suffices.

In an embodiment the second and third transport device are positioned above one another, preferably with their support surfaces practically parallel.

In an embodiment the device is furthermore provided with a control device connected to the drive of the second transport device and the drive of the third transport device, the cutting devices and the building drum for mutually time synchronously cooperation.

In an embodiment the one transport device is positioned with below and the other above the axis of rotation of the building drum or building drums. As a result the cords of the breaker plies can easily be arranged crossed.

In an embodiment the device furthermore comprising at least two placement devices, each for picking up bands from the first transport device and transferring and placing them in the longitudinal direction of the cords on the second and third transport device, respectively.

In an embodiment the second and third transport device each are provided with a placement device to transfer at least a part of the transport device in turns to a building drum to arrange a breaker ply against the building drum.

In an embodiment the device comprises two strip transport devices, having their transport directions mutually substantially parallel.

The invention will be further elucidated on the basis of exemplary embodiments of a device according to the invention, in which:
Figure 1 shows a device for manufacturing a breaker ply;
Figure 1 A shows a placement device for transporting the continuous rubber strip to the cutting device and a conveyor on which the breaker ply is built up;
Figure 2A shows a first device for manufacturing a breaker ply;
Figure 2B shows a second device for manufacturing a breaker ply;
Figure 3A shows the device according to figure 2A, in which the breaker ply is arranged on a building drum;
Figure 3B shows the device according to figure 2B, in which the breaker ply is arranged on the building drum;
Figure 4 shows an alternative embodiment of the device, and
Figure 5 shows a flow chart for the control of a device according to the invention of figures 2A-4;
Figure 6 shows a top view of an alternative embodiment of a device for manufacturing a breaker;
Figure 7 shows a side view of the device of figure 6;
Figure 8 shows an extruder for the device according to figure 6.

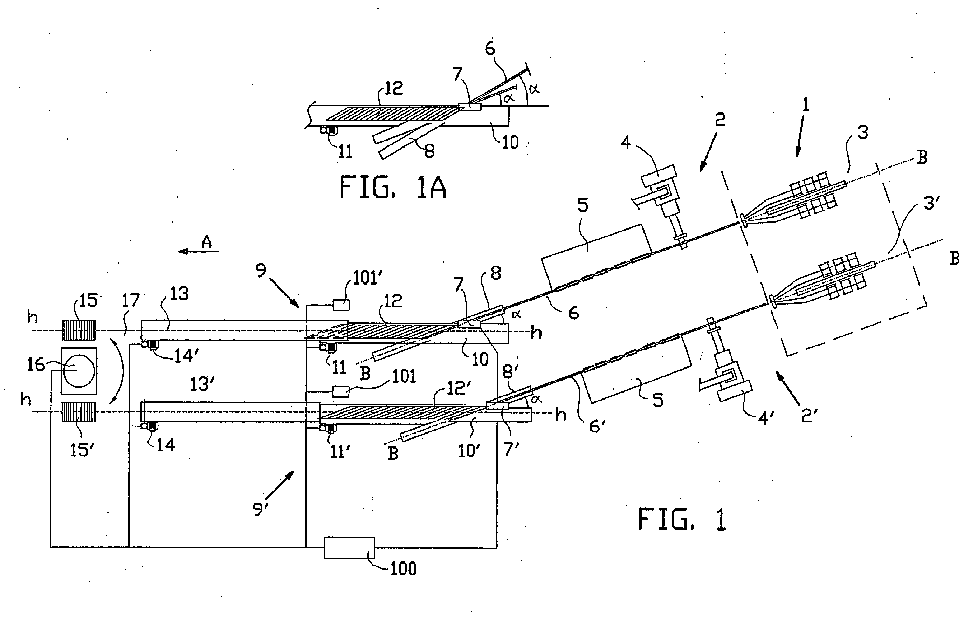

In figure 1 a device for manufacturing breaker 1 is shown, which consists of two parallel positioned devices for manufacturing a breaker ply 2, 2',. Each device for manufacturing a breaker ply 2, 2' comprises an unwinding device 3, 3' provided with spools with thread material on them. In general this thread material is steel cord.

For each of both devices for manufacturing a breaker ply, the device 1 furthermore comprises an extrusion device for extruding unvulcanized rubber around the thread material 4, 4' and cooling means 5, 5', provided here with buffer loops, for cooling the extruded material. Discontinuities in the process can be counteracted here as well. As the continuous rubber strip is provided with longitudinal wires here, the rubber strip is hardly susceptible to stretch or other deformations.

The resulting continuous rubber strip with embedded longitudinal cords 6, 6' is subsequently supplied to a cutting device 7, 7' by means of a conveyor 8, 8' offering a support surface, The continuous rubber strip is passed beyond the cutting device 7, 7' by the conveyor 8, 8' onto a second conveyor 9, 9'. In this embodiment the second conveyor 9, 9' comprises several conveyor belts for each device for manufacturing a breaker ply.

The continuous rubber strip 6, 6' is passed beyond cutting device 7, 7' on a first conveyor belt 10, 10' wherein the rubber strip is supplied at an angle, the cord angle α, α', on the first conveyor belt 10, 10'. Subsequently the rubber strip 6, 6' is cut diagonally by means of the cutting device 7, 7'. By means of drive 11, 11' the conveyor belt 10, 10' is subsequently driven in order to transfer the already built-up part of the breaker ply 12, 12' so that the next band can be placed.

When the breaker ply 12, 12' has the correct length, it is transferred to a second conveyor belt 13, 13' also provided with drives 14, 14'. The second conveyor belt 13, 13' subsequently transports the breaker ply 12, 12' to building drums 15, 15', which building drums are mounted on a drum holder 16, such that they are rotatable in the plane of the drawing as indicated by means of arrow 17, so that both drums may change places.

In figure 1 an operation unit 100 is furthermore indicated, in an embodiment a computer unit provided with an operation system and application software. The operation unit 100 is connected to the cutting devices 7 and 7', to measuring devices 101 and 101', in one embodiment cameras for recording images of the breaker ply while it is being manufactured and is finished, to the drive 11 and 11', to the drive 14 and 14' and to the building drum unit for operating it.

Figure 1 A shows how the angle α, α' of the first transport device can be adjusted with respect to the conveyor 9, 9', so that the cord angle of the breaker ply is adjustable as a result. It can also be immediately seen that the width of the breaker ply can simply be adjusted by means of the length of the band to be cut off from the continuous rubber strip.

in figure 1 the transport direction A of the conveyors 12, 12', 13 and 13' is furthermore indicated. Additionally the longitudinal cord direction B is indicated, and the longitudinal axis of the breaker ply h. It can be seen that said longitudinal axis is at an angle α, the cord angle, to the longitudinal cord direction B. It can be seen how the breaker ply under construction is placed against a side edge for a correct positioning. Especially the second conveyors 13 and 13' may be provided with a transfer device for transferring the conveyors lateral to the building drums in order to arrange the breaker ply exactly on the correct position on the building drum.

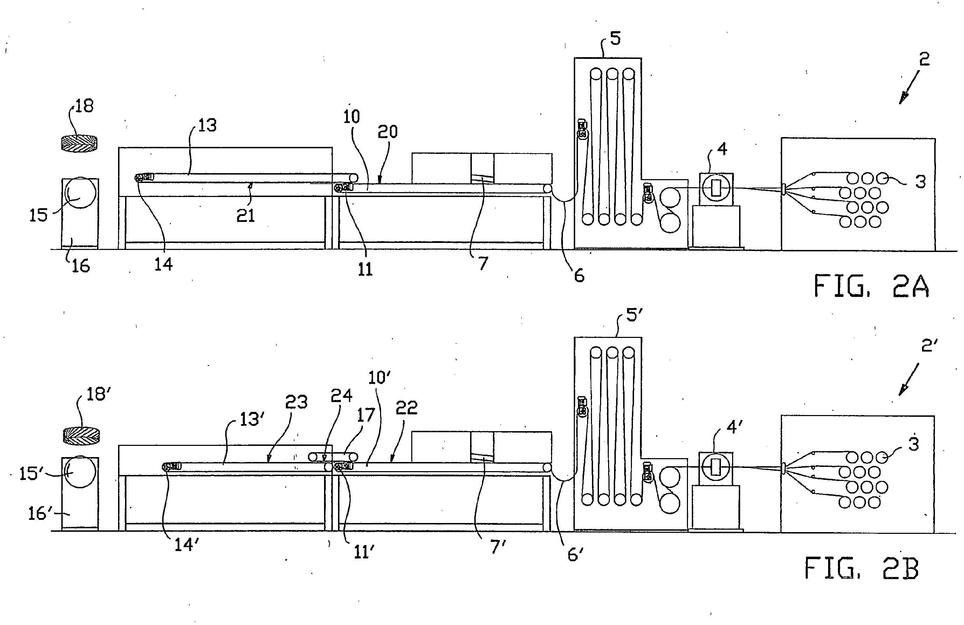

Figures 2A and 2B show a side view of the devices for manufacturing a breaker ply 2, 2', respectively. Here the reference numbers in figures 2A and 2B of course refer to the same parts as in figure 1 and 1 A. In the figures 2A and 2B the different conveyors for arranging the breaker ply on the building drum are clearly shown.

In figure 2A the conveyor belt 13 is positioned higher than the conveyor belt 10, so that the conveyor belt 10 on which a breaker ply is built up, transfers the breaker ply 12 so that it ends up at the lower side of the conveyor belt 13. The transport surfaces here lie in line with each other and almost in one plane. Particularly the pick up side of the conveyor 13 overlaps the discharge side of the conveyor 10. Optimal transfer occurs when the space between these parts has the same size as the thickness of a breaker ply.

For a proper transfer and picking up of the breaker ply, the conveyor belt 13 is provided to that end with a retaining unit for retaining the breaker ply, particularly permanent magnets or electromagnets, or by means of a device for ensuring a vacuum. The breaker ply is supplied and built up on the upper side 20 of conveyor 10 and transferred on the lower side 21 of the conveyor 13.

In figure 2B it can be seen how the breaker ply that is built up on conveyor 10' is transferred by means of a transfer conveyor belt 17 onto the second conveyor belt 13' which in this case is positioned at the same level as and in line (in one plane with the transport surface) with respect to the first conveyor belt 10'. The transfer conveyor 17 here serves as transfer device. The surfaces 22, 23 of respective conveyor belts 10' and 13' lie in one plane. For a proper transfer, the transfer conveyor 17 is arranged only a thickness of a breaker ply above it. The transfer conveyor 17 is provided with a retaining device for retaining the breaker ply, preferably permanent magnets or electromagnets or a retaining device for providing a vacuum to retain the breaker ply at the lower side 24 of transfer conveyor 17. Preferably in the area where the breaker ply is no longer supported by the conveyors 10' and 13'.

In figure 2A and 2B the direction into which the cords are oriented on the drum are indicated by means of numbers 18, 18'.

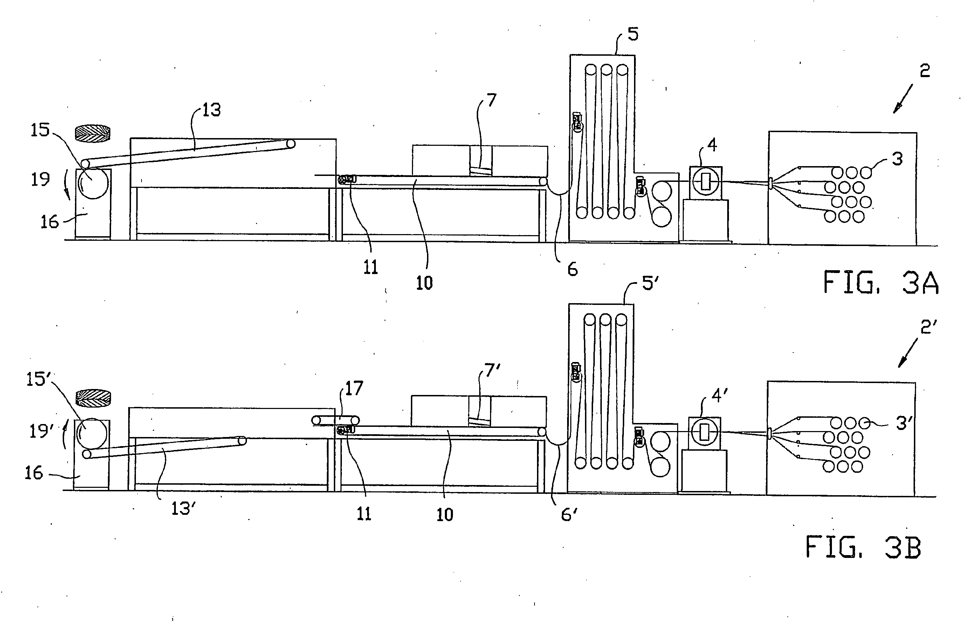

Figures 3A and 3B subsequently show the arranging of a formed breaker ply on the respective building drums 15, 15'. Here the conveyor belts 13 and 13' as a whole are moved towards the drum.

The operation of the device 1 is as follows. Cords are unwound from the spools 3 and 3' which cords are supplied to the extruder 4, 4' wherein the cords are placed adjacent to each other with a mutual centre-to-centre distance and are provided with a layer of unvulcanized rubber material in the extruder, so that a continuous rubber strip 6, 6' is created having embedded longitudinal cords wherein the longitudinal cords run parallel to each other and are equidistanced, the centre distance. The extruded rubber strip is subsequently passed through cooling means for cooling off, in one embodiment a cooling tower with loops, which cooling tower is indicated by 5, 5'. The length of the loops is adjustable to counterbalance possible differences in speed. This is not a problem here, as due to the cords in longitudinal direction the rubber strip is not susceptible to deformations which may adversely affect the final breaker ply.

The rubber strips are subsequently supplied on a first transport device which offers a support surface to the rubber strip and which transports the rubber strip past a cutting device 7, 7' and places it on the conveyor belt 10, 10'.

The cutting device subsequently cuts the strip diagonally at a cord angle α so that a band is created. Drive device 11, 11' then activates the conveyor belt and transfers the partially formed breaker ply 12 in the transport direction indicated by large arrow A, wherein the partially formed breaker ply 12 is shifted so far that a new part of the continuous strip 6 comes to lie adjacent to the already formed part of the breaker ply, at the correct, predetermined distance. Subsequently the cutting device cuts again and this continues until the complete breaker ply 12 is formed. Optionally the placement device or the transfer device may be provided with a splicer to splice the bands together, preferably by means of butt-splicing.

When the length of the formed breaker ply equals the pre-set length the breaker ply is subsequently transported to conveyor belts 13 and 13'. In the device 2 the breaker ply is here arranged at the lower side of the conveyor belt 13 where they are retained onto the conveyor belt by means of magnets or vacuum. In device 2' the breaker ply is transferred from the first conveyor belt 10' to a second conveyor belt 14' by means of transfer conveyor belt 17. It is ensured here that during transport to the drum the formed breaker ply is not deformed so that the shape of the breaker ply no longer changes. As a result the breaker plies can be arranged onto the drum 15, 15' highly accurately and without stress.

The conveyor belts for the two breaker plies 12 and 12' are positioned parallel here, particularly adjacently, particularly with the support surfaces for the breaker plies parallel.

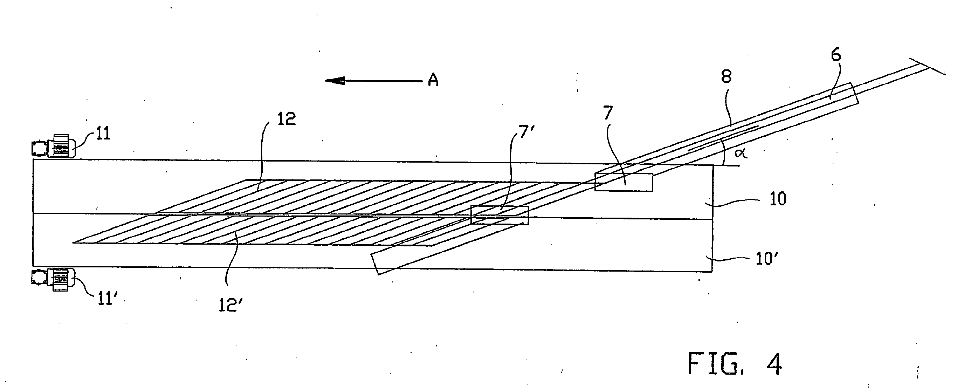

In an alternative embodiment of the device according to the invention, as shown in figure 4 (the figure numbers of the parts correspond to the figure numbers in the previous figures), conveyor belts 10 and 10' are situated parallel, adjacently and practically against each other and the second cutting device 7' is placed between the parallel conveyor belts 10, 10'. Because the conveyor belts 7,7' are placed parallel and adjacent to each other, particularly against each other here, it is possible that one unwinding device 3, one extrusion device 4 and one cooling device 5 suffice here. As a result the device is considerably cheaper than the embodiment described earlier on. It is of course possible to for instance use one cutting device, and to place cut off bands by means of a special transfer device on the correct place on the correct conveyor.

After the conveyors 10 and 11' the breaker plies 12 and 12' are further - transferred by means of further conveyors and on the building drums, see the previous figures. In the shown embodiment the continuous strip is first laid down at the correct distance next to the breaker ply under construction. After that the cutting devices 7, 7' cut the continuous rubber strip, so that two breaker plies are manufactured simultaneously. In an alternative embodiment, two transfer devices, preferably positioned in line with each other, are provided that place the cut off bands onto the conveyor belts 13 and 13'.

The transfer device according to the invention in one embodiment is adapted for picking up either bands or one strip by means magnets that may or may not be permanent or by means of creating vacuum. The entire process is operated and monitored by the operation unit 100. The data measured by recorders are processed, compared to reference values, and on the basis thereof the process is adjusted. This adjustment may for instance be effected by means of the drive units 11 and 11', by which means the mutual distance of the cut off bands can be adjusted. The conveyor belts may optionally analogous to the previous embodiment, transport the two breaker plies to two building drums which are positioned with their axes of rotation in line with each other, as shown in figures 2A-3B.

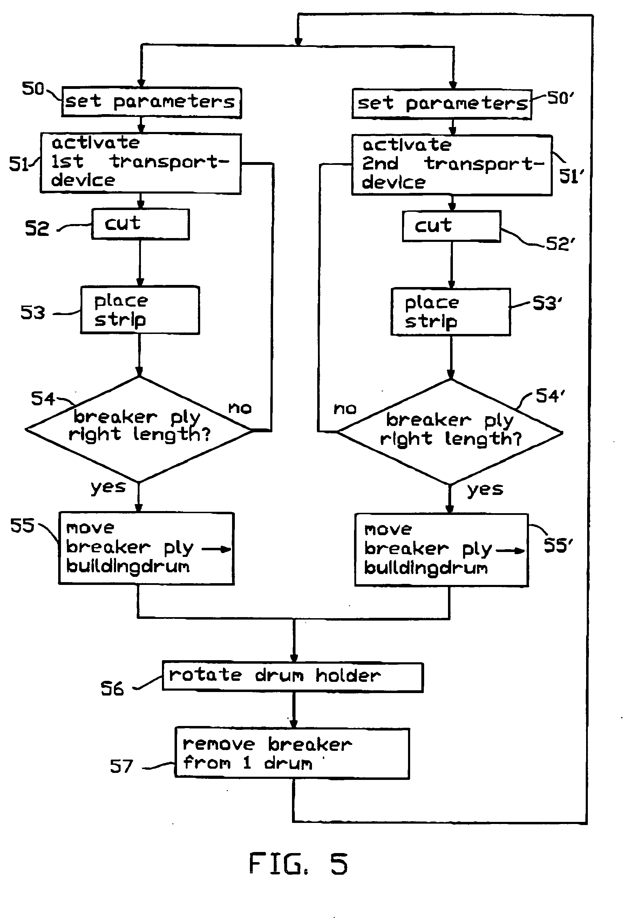

Figure 5 schematically shows what an operation system of a breaker building machine according to the invention has to do. The various transport devices and transfer devices each have a drive that is connected to an operation unit.

Additionally the machine is equipped with measuring cells, such as for instance cameras or the like, which each time measure a breaker ply under construction and during arranging it on a building drum. For instance a measuring device will each time measure the shape of a breaker ply on the conveyor 12, 12'. On the basis of the current shape and dimension of a breaker ply under construction and the target dimension and shape, the operation unit of the conveyor orders the drive unit of that conveyor to transfer the breaker ply under construction so that a next band can be placed at a predetermined distance from the breaker ply under construction. Said distance will generally equal the centre-to-centre distance of the longitudinal cords. However, by adjusting the distance within limits, it will also be possible to adjust the overall length of a breaker ply a little. For instance, when the breaker ply is built up from 40 bands, an increase of the mutual distance between the bands by 0.2 mm will render the breaker ply 8 mm longer.

In figure 5 parameters, such as band width, the target breaker ply length, and the like are first set in steps 50, 50'. In steps 51 and 51' the second transport devices are activated. In step 52 and 52' bands are cut from the continuous strip, which bands in step 53 and 53' are placed on the transport devices. In step 54 and 54' the recorders measure the shape of the breaker plies under construction and a decision routine decides whether the breaker plies have the right length. When the breaker plies have the right length, the respective breaker plies are transferred to the building drums (step 55, 55'). If not, then the second transport device moves the breaker ply under construction such that a next band can be placed. Meanwhile the breaker plies can be wound onto the building drums by rotating the building drums about their axes of rotation. Subsequently the building drums change places (step 56), and from the building drum on which a complete breaker is present (step 57) the breaker is removed in order to be further processed into a tyre. Steps 56 and 57 may optionally be switched.

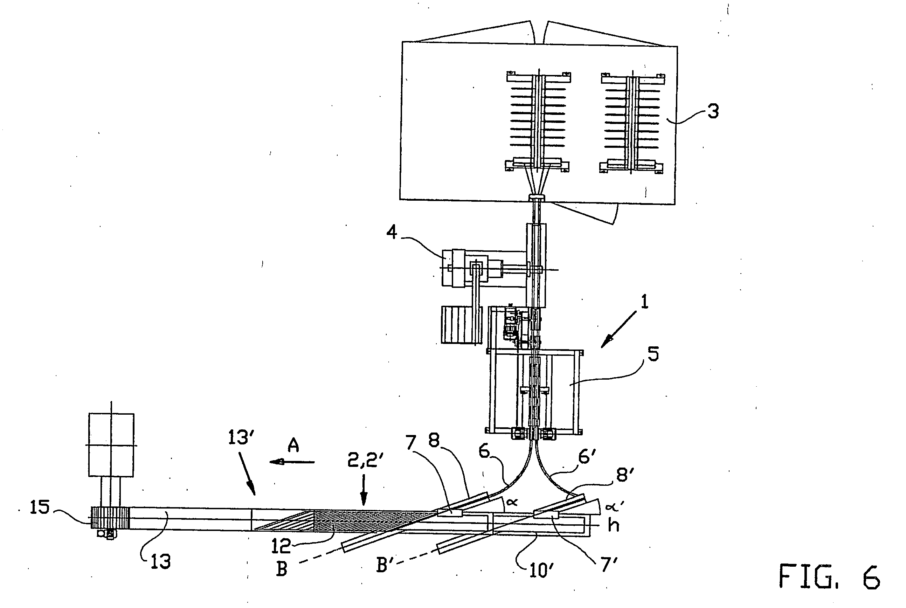

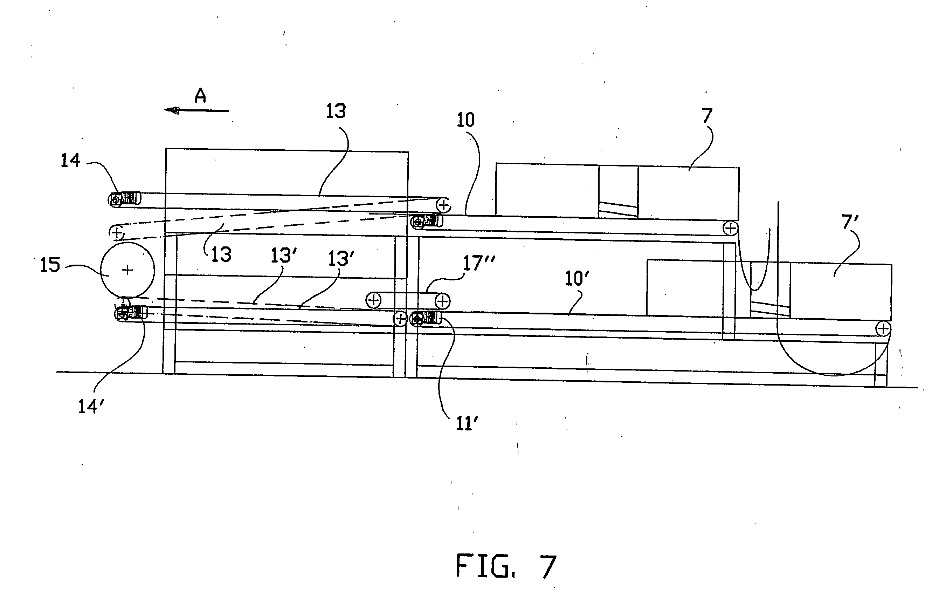

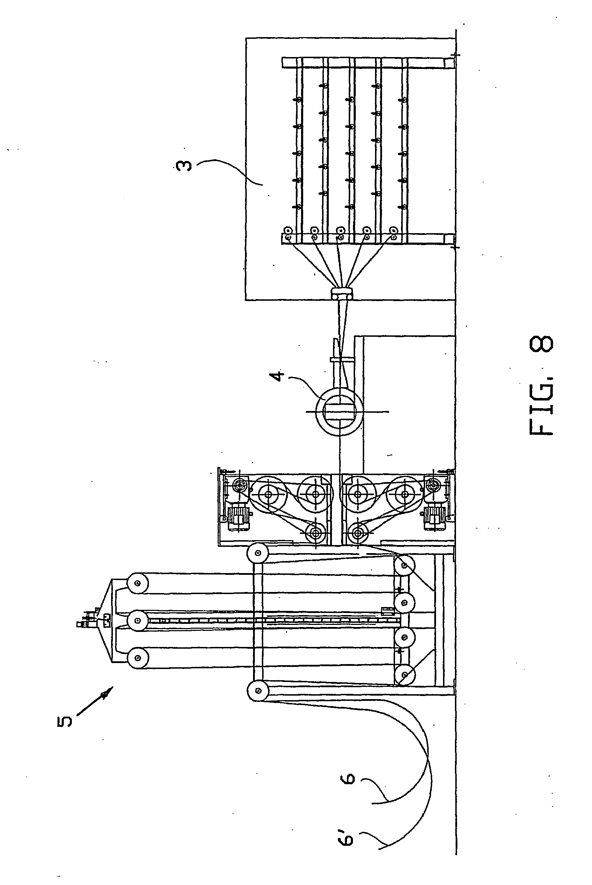

In figures 6-8 an alternative embodiment of the device for manufacturing a breaker is shown. Also in these figures the numbers indicate identical parts. Here as well the transport devices just like in the figures 2A-4 are almost parallel. However, in this embodiment the conveyor belts 13 and 13' are particularly placed above one another, particularly with the support surfaces for the breaker plies parallel and above each other.

In this embodiment it is possible that only one building drum 15 suffices, whereas, just like in figure 4, only one extrusion device suffices. Because two conveyor belts 13 and 13' are positioned above each other the breaker plies 12, 12', which in the final tyre will have crossed cords, can be almost simultaneously manufactured. Moreover no time is lost with changing the building drums like in the embodiments as mentioned above. Moreover the transfer of conveyor belts 13 and 13' is simpler here: during application the belts take up the positions indicated by dots, so that (here) they only have to rotate substantially about a horizontal axis, parallel to the building drum axis of rotation and the breaker plies, near the feeding end of the conveyor belts 13 and 13'.

The operation is as follows. The extrusion device 4 simultaneously produces two parallel rubber strips having embedded longitudinal cords. Via the conveyors 8 and 8' the strips are passed parallel to the direction B of the longitudinal cords to the cutting devices 7 and 7'. Almost simultaneously bands are cut there from the rubber strip at a cord angle α to the longitudinal cords. By means of placement units both bands are picked up and placed on the conveyor belts 10 and 10' respectively, behind already placed bands. The conveyor belts 10 and 10' are activated by means of drives 11 and 11', operated by means of the control device, to transfer the placed breaker ply parts in the transport direction A. The transfer is determined to preferably place the bands against each other. To adjust a whole number of bands in a breaker ply or to realise the target breaker ply length said distance can be selected to be slightly larger, however at the most 20% of the centre-to-centre distance of the cords larger to prevent that too large an imbalance is created in the final tyre.

When the control device establishes that the breaker plies are ready the breaker plies are transported further in the direction A and conveyors 13 and 13' (on 13' via transfer conveyor 17" which is provided with magnets that may or may not be permanent or a vacuum unit) take over the breaker plies. Meanwhile new breaker plies are built again on conveyors 10 and 10'. Conveyors 13 and 13' are meanwhile alternately transferred to the building drum in the positions indicated by means of the conveyors 13 and 13' shown in dots and are activated by means of drives 14 and 14'. As a result the breaker plies are transferred to the building drum 15, which first rotates one direction about its axis of rotation and thereby picks up the first breaker ply, and subsequently rotates in opposite direction to pick up the second breaker ply. It will be clear that this breaker building device is capable of accurately manufacturing a complete breaker on a building drum on a very small surface area in a production facility, in a very short time.

It will be clear that the above description is meant to elucidate the operation of preferred embodiments, and that the invention is not limited to said embodiments.

## Claims

1. Device (1) for producing a breaker ply having a longitudinal axis, a breaker ply length and mutually parallel cords at a pre-set cord angle to the longitudinal axis, wherein the device comprises:
- an extrusion device (4; 4') for producing at least one continuous rubber strip having substantially mutually parallel embedded longitudinal cords having a centre-to-centre distance and having a strip width;
- a first transport device (8; 8') for transporting the continuous rubber strip in the direction of the longitudinal cords;
- a second transport device (9; 9') for transporting the breaker ply in the longitudinal direction of the breaker ply in a transport- direction, comprising a support surface for the breaker ply;
- a cutting device (7; 7') for cutting bands from the continuous strip diagonally at the cord angle, a number of bands forming the breaker ply;
- a building drum (15; 15') for receiving the breaker ply coming from the second transport device, wherein the building drum has an axis of rotation,
wherein the first transport device (8; 8') is adapted for transporting the continuous strip to the second transport device, the second transport device is positioned with its transport direction at an angle (α) having the size of a cord angle to the direction of the longitudinal cords, the longitudinal direction of the breaker ply substantially corresponds to the transport direction, and the building drum is positioned with its axis of rotation substantially transverse to the second transport direction, wherein the second transport device is provided with a first drive (11; 11') and a control device (100) for controlling the first drive, wherein the control device is adapted for controlling the drive for adaptably moving the support surface of the second transport device with a transfer distance that can be set for positioning the next band, or a transport distance for transporting the breaker ply towards the building drum, **characterized in that** the control device (100) comprises a memory for the strip width, the centre-to-centre distance between the longitudinal cords and the breaker ply length and a calculating unit for calculating a band number, being the necessary number of bands to form a breaker ply, and the transfer distance from the centre-to-centre distance, the strip width and the breaker ply length.

2. Device according to claim 1, wherein said transfer distance is calculated for each breaker ply again, and wherein preferably the control device (100) comprises a counter for counting the number of bands placed, and a decision routine for deciding to transport the breaker ply to the building drum (15; 15') when the number of bands placed equals the band number, or when the breaker ply length has been reached.

3. Device according to claim 1 or 2, further comprising a measuring unit (101) for measuring the length of the breaker ply on the support surface of the second transport device during making the breaker ply, connected to the control device (100).

4. Device according to claim 3, wherein the control device (100) is adapted for adjusting the transfer distance based on the measured length of the breaker ply during manufacturing it, the set breaker ply length and the set centre-to-centre distance between the longitudinal cords.

5. Device according to any one of the preceding claims, wherein the first transport device (8; 8') furthermore comprises a placement device for picking up the continuous rubber strip or bands from the first transport device and placing it or them on the support surface of the second transport device (9; 9'), wherein preferably the placement device is positioned after the cutting device (7; 7') for placing the continuous rubber strip on the support surface, and wherein preferably the placement device is provided with a splicer for splicing the bands together into a breaker ply.

6. Device according to any one of the preceding claims, wherein the second transport device comprises a transfer device (117) for transferring the support surface of the second transport device to the building drum for placing the breaker ply against the building drum.

7. Device according to any one of the preceding claims, wherein the second transport device (9; 9') comprises a first conveyor (10; 10') and a second conveyor (13; 13'), wherein the conveyors are positioned with their transport directions in line, wherein the first conveyor comprises a support surface for receiving the bands or continuous rubber strip and a drive connected to the control device (100).

8. Device according to claim 7, wherein the second conveyor (13; 13') comprises a support surface (20) for supporting the breaker ply, wherein the support surface of the second conveyor is movable from a first position, in which the support surface of the first conveyor lies in line with the support surface of the second conveyor, to a second position, in which the support surface rests against the building drum (15; 15').

9. Assembly for manufacturing a breaker for a tyre, comprising two devices (1) according to any one of the preceding claims for almost simultaneously manufacturing two breaker plies, wherein the second transport devices (9, 9') of the devices for manufacturing a breaker ply, with their transport directions are positioned substantially parallel to each other.

10. Assembly according to claim 9, wherein the building drums (15, 15') of the first and second device (1) for manufacturing a breaker ply, with their axes of rotation are positioned substantially in line, and are mounted on a common building drum holder (16) so as to be jointly rotatable about an axis substantially perpendicular to the axis of rotation.

11. Assembly according to claim 9 or 10, wherein the extrusion devices (4, 4') of both devices for manufacturing a breaker ply, with their extrusion devices are positioned substantially parallel to each other.

12. Assembly according to any one of the claims 9-11, wherein the second transport devices (9, 9') of both devices for manufacturing a breaker ply each comprise a support surface for supporting and transferring a breaker ply, wherein both support surfaces are movable to the building drums of the respective devices for manufacturing a breaker ply, wherein one support surface (23) is movable to the upper side of the building drum (15) for arranging a front side of a breaker ply on the upper side of the building drum, and the other support surface (21) is movable to the lower side of the other building drum (15') for arranging the front side of a breaker ply on the lower side of said building drum.

13. Device according to any one of the preceding claims 1-8, furthermore comprising a third transport device (10'), having its transport direction substantially parallel to the transport direction of the second transport device (10), and a second cutting device (7') for cutting the continuous rubber strip substantially parallel to the first cutting device (7), wherein preferably the second cutting device (7') is arranged for cutting between the second and third transport device, and, wherein preferably the third conveyor comprises a support surface for a breaker ply, situated adjacent to and consecutive to the support surface of the second conveyor.

14. Device according to any one of the preceding claims, wherein the control device (100) comprises a memory and a data processing unit, an input unit for setting the centre-to-centre distance between the longitudinal cords and a breaker ply length and software for reading a set centre-to-centre distance between the longitudinal cords and the breaker ply length.

15. Device according to claim 14, when dependent from claim 5, wherein the software is provided with a distance routine for calculating the target mutual distance between the bands from the band width, the centre-to-centre distance between the longitudinal cords and the set breaker ply length, and wherein preferably the software is furthermore provided with control routines for operating the placement device for transferring a partly formed breaker ply, wherein the transfer is calculated by means of the distance routine for calculating the mutual distance between the bands.

16. Method for producing a breaker ply having a longitudinal axis, a breaker ply length and mutually parallel cords at a pre-set cord angle to the longitudinal axis, wherein a continuous rubber strip provided with substantially parallel longitudinal cords, a set strip width and set centre-to-centre distance between the longitudinal cords one to the other, is produced in the longitudinal direction by means of an extrusion process, the continuous rubber strip is cut into bands at the cord angle, a predetermined number of bands with cords substantially parallel and adjacent to each other at a set band distance with respect to each other for forming a breaker ply having a pre-set breaker ply length are placed on a support surface, wherein the mutual distance of the bands is calculated to obtain a set length of the breaker ply, when the breaker ply has reached the target breaker ply length the breaker ply is transported in longitudinal direction to a building drum, and is wound on the building drum, wherein a predetermined mutual centre-to-centre distance of the cords and the width of the continuous strip is set, the length of the breaker ply is measured during manufacturing, and the mutual distance of the bands is each time adjusted for realising a pre-set breaker ply length, wherein the adjustment of the mutual distance of the bands at the most is the centre-to-centre distance of the cords, preferably at the most 20% of the centre-to-centre distance.

17. Method according to claim 16, wherein the centre-to-centre distance and the target length of the breaker ply is entered into a computer provided with control software, wherein the control software calculates the distance between the bands, and wherein preferably the control software regulates the transfer of an already formed part of the breaker ply.

## Patentansprüche

1. Vorrichtung (1) zum Herstellen einer Gürtelschicht mit einer Längsachse, einer Gürtelschichtlänge und gegenseitig parallelen Schnüren unter einem vorab eingestellten Schnurwinkel bezüglich der Längsachse, wobei die Vorrichtung umfaßt:
- eine Extrudiervorrichtung (4; 4') zum Herstellen von zumindest einem durchgehenden Gummistreifen mit hauptsächlich gegenseitig parallelen eingebetteten Längsschnüren mit einem Abstand von Mitte zu Mitte und mit einer Streifenbreite;
- eine erste Fördervorrichtung (8; 8') zum Fördern des durchgehenden Gummistreifens in der Richtung der Längsschnüre;
- eine zweite Förderrichtung (9; 9') zum Fördern der Gürtelschicht in der Längsrichtung der Gürtelschicht in einer Förderrichtung, umfassend eine Stützfläche für die Gürtelschicht;
- eine Schneidvorrichtung (7; 7') zum schräg unter dem Schnurwinkel Schneiden der Bänder von dem durchgehenden Streifen, eine Anzahl die Gürtelschicht bildende Bänder;
- eine Bautrommel (15; 15') zum Aufnehmen der von der zweiten Fördervorrichtung stammenden Gürtelschicht, wobei die Bautrommel eine Drehachse hat,
wobei die erste Fördervorrichtung (8; 8') für das Fördern des durchgehenden Streifens zur zweiten Fördervorrichtung eingerichtet ist, die zweite Fördervorrichtung aufgestellt ist, derartig daß ihre Förderrichtung einen Winkel (α) macht von der Größe eines Schnurwinkels bezüglich der Richtung der Längsschnüre, die Längsrichtung der Gürtelschicht hauptsächlich der Förderrichtung entspricht, und die Bautrommel mit ihrer Drehachse hauptsächlich quer auf der zweiten Förderrichtung aufgestellt ist, wobei die zweite Fördervorrichtung mit einem ersten Antrieb (11; 11') und einer Steuervorrichtung (100) zum Steuern des ersten Antriebs versehen ist, wobei die Steuervorrichtung eingerichtet ist zum Steuern des Antriebs zum einstellbar Bewegen der Stützfläche der zweiten Fördervorrichtung mit einem einstellbaren Übertragungsabstand zum Positionieren des folgenden Bandes oder aber einem Förderabstand zum Fördern der Gürtelschicht zu der Bautrommel, **dadurch gekennzeichnet, daß** die Steuervorrichtung (100) einen Speicher für die Streifenbreite umfaßt, den Abstand von Mitte zu Mitte zwischen den Längsschnüren und der Gürtelschichtlänge und eine Berechnungseinheit zum Berechnen einer Bandanzahl, was die benötigte Anzahl Bänder ist um eine Gürtelschicht zu bilden und den Übertragungsabstand aus dem Abstand von Mitte zu Mitte, die Streifenbreite und die Gürtelschichtlänge.

2. Vorrichtung nach Anspruch 1, wobei der Übertragungsabstand für jede Gürtelschicht nochmals berechnet wird und wobei vorzugsweise die Steuervorrichtung (100) einen Zähler zum Zählen der Anzahl angeordneter Bänder umfaßt, und eine Entscheidungsroutine womit entschieden wird die Gürtelschicht zu der Bautrommel (15; 15') zu fördern wenn die Anzahl angeordneter Streifen gleich ist an der Streifenanzahl, oder aber wenn die Gürtelschichtlänge erreicht ist.

3. Vorrichtung nach Anspruch 1 oder 2, weiter umfassend eine Meßeinheit (101) zum Messen der Länge der Gürtelschicht auf der Stützfläche der zweiten Fördervorrichtung während dem Herstellen der Gürtelschicht, mit der Steuervorrichtung (100) verbunden.

4. Vorrichtung nach Anspruch 3, wobei die Steuervorrichtung (100) eingerichtet ist zum Anpassen des Übertragungsabstandes auf der gemessenen Länge der Gürtelschicht während dem Herstellen davon, auf der eingestellten Gürtelschichtlänge und auf dem eingestellten Abstand von Mitte zu Mitte zwischen den Längsschnüren basiert.

5. Vorrichtung nach einem der vorhergehenden Ansprüche, wobei die erste Fördervorrichting (8; 8') weiter eine Aufstellungsvorrichtung zum Aufnehmen des durchgehenden Gummistreifens ober aber der Bänder von der ersten Fördervorrichtung und Anordnen davon auf der Stützfläche der zweiten Fördervorrichtung (9; 9') umfaßt, wobei vorzugsweise die Aufstellungsvorrichtung nach der Schneidvorrichtung (7; 7') aufgestellt ist um den durchgehenden Gummistreifen auf der Stützfläche anzuordnen und wobei vorzugsweise die Aufstellungsvorrichtung mit einer Schweißvorrichtung versehen ist, um die Bänder zu einer Gürtelschicht zusammenzuschweißen.

6. Vorrichtung nach einem der vorhergehenden Ansprüche, wobei die zweite Fördervorrichtung eine Übertragungsvorrichtung (117) umfaßt zum Übertragen der Stützfläche der zweiten Fördervorrichtung zu der Bautrommel zum Anordnen der Gürtelschicht gegen die Bautrommel.

7. Vorrichtung nach einem der vorhergehenden Ansprüche, wobei die zweite Fördervorrichtung (9; 9') einen ersten Förderer (10; 10') und einen zweiten Förderer (13; 13') umfaßt, wobei die Förderer mit ihrer Förderrichtungen in einer Linie aufgestellt sind, wobei der erste Förderer eine Stützfläche zum Empfangen der Bänder oder des durchgehenden Gummistreifens und eines mit der Steuervorrichtung (100) verbundenen Antriebs umfaßt.

8. Vorrichtung nach Anspruch 7, wobei der zweite Förderer (13; 13') eine Stützfläche (20) zum Stützen der Gürtelschicht umfaßt, wobei die Stützfläche des zweiten Förderers von einer ersten Position, worin die Stützfläche des ersten Förderers in einer Linie mit der Stützfläche des zweiten Förderers liegt, zu einer zweiten Position, worin die Stützfläche gegen die Bautrommel (15, 15') anliegt, beweglich ist.

9. System zum Herstellen eines Gürtels für einen Reifen, umfassend zwei Vorrichtungen (1) nach einem der vorhergehenden Ansprüche zum fast gleichzeitig Herstellen von zwei Gürtelschichten, wobei die zweiten Fördervorrichtungen (9; 9') der Vorrichtungen zum Herstellen einer Gürtelschicht, mit ihrer Förderrichtungen hauptsächlich parallel aneinander aufgestellt sind.

10. System nach Anspruch 9, wobei die Bautrommel (15, 15') der ersten und zweiten Vorrichtung (1) zum Herstellen einer Gürtelschicht, mit ihren Drehachsen hauptsächlich in einer Linie aufgestellt sind und auf einem gemeinsamen Bautrommelbehälter (16) montiert sind und so gemeinsam um eine Achse hauptsächlich senkrecht auf der Drehachse rotierbar sind.

11. System nach Anspruch 9 oder 10, wobei die Extrudiervorrichtungen (4, 4') von beiden Vorrichtungen zum Herstellen einer Gürtelschicht, mit ihrer Extrudiervorrichtungen hauptsächlich parallel aneinander aufgestellt sind.

12. System nach einem der vorhergehenden Ansprüche 9-11, wobei die zweiten Fördervorrichtungen (9, 9') von beiden Vorrichtungen zum Herstellen einer Gürtelschicht jede eine Stützfläche zum Stützen und Übertragen einer Gürtelschicht umfassen, wobei beide Stützflächen zu den Bautrommeln der jeweiligen Vorrichtungen beweglich sind zum Herstellen einer Gürtelschicht, wobei eine Stützfläche (23) zu der Oberseite der Bautrommel (15) beweglich ist zum Anordnen einer Vorderseite einer Gürtelschicht auf der Oberseite der Bautrommel, und die andere Stützfläche (21) zu der Unterseite der anderen Bautrommel (15') beweglich ist zum Anordnen der Oberseite einer Gürtelschicht auf der Unterseite der Bautrommel.

13. Vorrichtung nach einem der vorhergehenden Ansprüche 1-8, weiter umfassend eine dritte Fördervorrichtung (10'), mit ihrer Förderrichtung hauptsächlich parallel zu der Förderrichtung der zweiten Fördervorrichtung (10) und eine zweite Schneidvorrichtung (7') zum Schneiden des durchgehenden Gummistreifens hauptsächlich parallel zu der ersten Schneidvorrichtung (7), wobei vorzugsweise die zweite Schneidvorrichtung (7') angeordnet ist zum Schneiden zwischen der zweiten und dritten Fördervorrichtung, und, wobei vorzugsweise der dritte Förderer eine Stützfläche für eine Gürtelschicht umfaßt, angrenzend an und folgend auf die Stützfläche des zweiten Förderers.

14. Vorrichtung nach einem der vorhergehenden Ansprüche, wobei die Steuervorrichtung (100) einen Speicher und eine Datenverarbeitungseinheit, eine Eingabeeinheit zum Einstellen des Abstandes von Mitte zu Mitte zwischen den Längsschnüren und einer Gürtelschichtlänge und Software zum Einlesen eines eingestellten Abstandes von Mitte zu Mitte zwischen den Längsschnüren und der Gürtelschichtlänge umfaßt.

15. Vorrichtung nach Anspruch 14, wenn abhängig von Anspruch 5, wobei die Software mit einer Abstandsroutine zum Berechnen des gewünschten gegenseitigen Abstandes zwischen den Bändern aus der Bänderbreite, des Abstandes von Mitte zu Mitte zwischen den Längsschnüren und der eingestellten Länge der Gürtelschicht versehen ist und wobei vorzugsweise die Software weiter mit Steuerroutinen versehen ist, zum Steuern der Aufstellungsvorrichtung zum Übertragen einer teilweise gebildeten Gürtelschicht, wobei die Übertragung durch die Abstandsroutine zum Berechnen des gegenseitigen Abstandes zwischen den Bändern berechnet wird.

16. Verfahren zum Herstellen einer Gürtelschicht mit einer Längsachse, einer Gürtelschichtlänge und gegenseitig parallelen Schnüren unter einem vorab eingestellten Schnurwinkel bezüglich der Längsachse, wobei ein durchgehender Gummistreifen mit hauptsächlich parallelen Längsschnüren, einer eingestellten Streifenbreite und eingestelltem Abstand von Mitte zu Mitte zwischen den Längsschnüren untereinander in der Längsrichtung durch ein kontinuierliches Extrusionsverfahren hergestellt wird, der durchgehende Gummistreifen unter dem Schnurwinkel in Bändern geschnitten wird, eine vorabbestimmte Anzahl Bänder mit Schnüren hauptsächlich parallel und nebeneinander auf einem eingestellten Bandabstand bezüglich einander zum Bilden einer Gürtelschicht mit einer vorab eingestellten Gürtelschichtlänge auf einer Stützfläche angeordnet werden, wobei der gegenseitige Abstand der Bänder berechnet wird um eine eingestellte Länge der Gürtelschicht zu erhalten, wenn die Gürtelschicht die gewünschte Gürtelschichtlänge erreicht hat, die Gürtelschicht in Längsrichtung zu einer Bautrommel gefördert wird und auf der Bautrommel gewickelt wird, wobei ein vorab eingestellter gegenseitiger Abstand von Mitte zu Mitte der Schnüre und die Breite des durchgehenden Streifens eingestellt wird, die Länge der Gürtelschicht während dem Herstellen gemessen wird und der gegenseitige Abstand der Bänder jeweils angepasst wird zum Erreichen einer vorab eingestellten Gürtelschichtlänge, wobei die Anpassung des gegenseitigen Abstandes der Bänder höchstens der Abstand von Mitte zu Mitte der Schnüre, vorzugsweise höchstens 20% des Abstandes von Mitte zu Mitte, ist.

17. Verfahren nach Anspruch 16, wobei der Abstand von Mitte zu Mitte und die gewünschte Länge der Gürtelschicht in einen mit Steuersoftware versehenen Computer eingegeben wird, wobei die Steuersoftware den Abstand zwischen den Bändern berechnet, und wobei vorzugsweise die Steuersoftware die Übertragung eines bereits gebildeten Teils der Gürtelschicht regelt.

## Revendications

1. Dispositif (1) de production d'une nappe de renforcement de la bande de roulement présentant un axe longitudinal, une longueur de nappe de renforcement de la bande de roulement et des câbles mutuellement parallèles selon un angle prédéfini entre câble et axe longitudinal, dans lequel le dispositif comprend :
- un dispositif d'extrusion (4 ; 4') destiné à produire au moins une bande de caoutchouc continue ayant des câbles longitudinaux imbriqués essentiellement mutuellement parallèles présentant une distance centre à centre et présentant une largeur de bande ;
- un premier dispositif de transport (8 ; 8') destiné à transporter la bande de caoutchouc continue dans la direction des câbles longitudinaux ;
- un second dispositif de transport (9 ; 9') destiné à transporter la nappe de renforcement de la bande de roulement dans la direction longitudinale de la nappe de renforcement de la bande de roulement dans une direction de transport, comportant une surface de soutien de la nappe de renforcement de la bande de roulement ;
- un dispositif de coupe (7 ; 7') destiné à couper des bandes à partir de la bande continue, en diagonale au niveau de l'angle du câble, un certain nombre de bandes formant la nappe de renforcement de la bande de roulement ;
- un tambour de confection (15; 15') destiné à recevoir la nappe de renforcement de la bande de roulement provenant du second dispositif de transport, le tambour de confection présentant un axe de rotation;
dans lequel le premier dispositif de transport (8 ; 8') est adapté pour transporter la bande continue vers le second dispositif de transport, le second dispositif de transport est positionné avec sa direction de transport qui forme un angle (α) ayant la taille d'un angle de câble par rapport à la direction des câbles longitudinaux, la direction longitudinale de la nappe de renforcement de la bande de roulement correspondant essentiellement à la direction de transport, et le tambour de confection est positionné avec son axe de rotation essentiellement transversal à la seconde direction de transport, dans lequel le second dispositif de transport est muni d'un premier entraînement (11 ; 11') et d'un dispositif de commande (100) permettant de commander le premier entraînement, dans lequel le dispositif de commande est adapté pour commander l'entraînement afin de déplacer par adaptation la surface de soutien du second dispositif de transport avec une distance de transfert qui peut être définie pour positionner la bande suivante, ou une distance de transport pour transporter la nappe de renforcement de la bande de roulement vers le tambour de confection, **caractérisé en ce que** le dispositif de commande (100) comprend une mémoire de la largeur de bande, de la distance centre à centre entre les câbles longitudinaux et de la longueur de la nappe de renforcement de la bande de roulement, et une unité de calcul destinée à calculer un nombre de bandes, qui est le nombre de bandes nécessaires pour former une nappe de renforcement de la bande de roulement, et la distance de transfert depuis la distance centre à centre, la largeur de bande et la longueur de la nappe de renforcement de la bande de roulement.

2. Dispositif selon la revendication 1, dans lequel ladite distance de transfert est calculée à nouveau pour chaque nappe de renforcement de la bande de roulement, et dans lequel de préférence le dispositif de commande (100) comprend un compteur destiné à compter le nombre de bandes placées, et un sous-programme de décision pour décider de transporter la nappe de renforcement de la bande de roulement vers le tambour de confection (15 ; 15') lorsque le nombre de bandes placées est égal au nombre de bandes, ou lorsque la longueur de la nappe de renforcement de la bande de roulement est atteinte.

3. Dispositif selon la revendication 1 ou 2, comprenant en outre une unité de mesure (101) destinée à mesurer la longueur de la nappe de renforcement de la bande de roulement sur la surface de soutien du second dispositif de transport pendant la fabrication de la nappe de renforcement de la bande de roulement, connectée au dispositif de commande (100).

4. Dispositif selon la revendication 3, dans lequel le dispositif de commande (100) est adapté pour ajuster la distance de transfert sur la base de la longueur mesurée de la nappe de renforcement de la bande de roulement lors de sa fabrication, la longueur définie de la nappe de renforcement de la bande de roulement et la distance centre à centre définie entre les câbles longitudinaux.

5. Dispositif selon l'une quelconque des revendications précédentes, dans lequel le premier dispositif de transport (8 ; 8') comprend de plus un dispositif de placement pour saisir la bande de caoutchouc continue ou des bandes depuis le premier dispositif de transport et la ou les placer sur la surface de soutien du second dispositif de transport (9 ; 9'), dans lequel de préférence le dispositif de placement est positionné après le dispositif de coupe (7 ; 7') pour placer la bande de caoutchouc continue sur la surface de soutien, et dans lequel de préférence le dispositif de placement est muni d'un outil d'épissage pour épisser les bandes ensemble en une nappe de renforcement de la bande de roulement.

6. Dispositif selon l'une quelconque des revendications précédentes, dans lequel le second dispositif de transport comprend un dispositif de transfert (117) destiné à transférer la surface de soutien du second dispositif de transport vers le tambour de confection afin de placer la nappe de renforcement de la bande de roulement contre le tambour de confection.

7. Dispositif selon l'une quelconque des revendications précédentes, dans lequel le second dispositif de transport (9; 9') comprend un premier transporteur (10 ; 10') et un second transporteur (13 ; 13'), dans lequel les transporteurs sont positionnés avec leurs directions de transport alignées, dans lequel le premier transporteur comprend une surface de soutien destinée à recevoir les bandes ou la bande de caoutchouc continue et un entraînement connecté au dispositif de commande (100).

8. Dispositif selon la revendication 7, dans lequel le second transporteur (13 ; 13') comprend une surface de soutien (20) destinée à soutenir la nappe de renforcement de la bande de roulement, dans lequel la surface de soutien du second transporteur est mobile depuis une première position dans laquelle la surface de soutien du premier transporteur est alignée avec la surface de soutien du second transporteur, vers une seconde position dans laquelle la surface de soutien repose contre le tambour de confection (15; 15').

9. Ensemble de fabrication d'une nappe de renforcement de la bande de roulement pour pneu, comprenant deux dispositifs (1) selon l'une quelconque des revendications précédentes pour fabriquer presque simultanément deux nappes de renforcement de la bande de roulement, dans lequel les seconds dispositifs de transport (9 ; 9') des dispositifs de fabrication d'une nappe de renforcement de la bande de roulement, ont leurs directions de transport positionnées essentiellement parallèlement l'une à l'autre.

10. Ensemble selon la revendication 9, dans lequel les tambours de confection (15 ; 15') du premier et second dispositifs (1) de fabrication d'une nappe de renforcement de la bande de roulement, par leurs axes de rotation, sont positionnés essentiellement alignés, et sont montés sur une monture de tambour de confection commune (16) de façon à pouvoir tourner conjointement autour d'un axe essentiellement perpendiculaire à l'axe de rotation.

11. Ensemble selon la revendication 9 ou 10, dans lequel les dispositifs d'extrusion (4 ; 4') des deux dispositifs de fabrication d'une nappe de renforcement de la bande de roulement, par leurs dispositifs d'extrusion, sont positionnés essentiellement parallèlement l'un à l'autre.

12. Ensemble selon l'une quelconque des revendications 9 à 11, dans lequel les seconds dispositifs de transport (9 ; 9') des deux dispositifs de fabrication d'une nappe de renforcement de la bande de roulement comprennent chacun une surface de soutien destinée à soutenir et transférer une nappe de renforcement de la bande de roulement, dans lequel les deux surfaces de soutien peuvent être déplacées vers les tambours de confection des dispositifs respectifs pour fabriquer une nappe de renforcement de la bande de roulement, dans lequel une première surface de soutien (23) peut être déplacée vers le côté supérieur du tambour de confection (15) pour agencer un côté avant d'une nappe de renforcement de la bande de roulement sur le côté supérieur du tambour de fabrication, et l'autre surface de soutien (21) peut être déplacée vers le côté inférieur de l'autre tambour de confection (15') pour agencer le côté avant d'une nappe de renforcement de la bande de roulement sur le côté inférieur dudit tambour de confection.

13. Dispositif selon l'une quelconque des revendications précédentes 1 à 8, comprenant de plus un troisième dispositif de transport (10') ayant sa direction de transport essentiellement parallèle à la direction de transport du second dispositif de transport (10), et un second dispositif de coupe (7') destiné à couper la bande de caoutchouc continue essentiellement parallèle au premier dispositif de coupe (7), dans lequel de préférence le second dispositif de coupe (7') est agencé pour couper entre le second et le troisième dispositifs de transport, et dans lequel de préférence le troisième transporteur comprend une surface de soutien d'une nappe de renforcement de la bande de roulement, située de façon adjacente et consécutive à la surface de soutien du second transporteur.

14. Dispositif selon l'une quelconque des revendications précédentes,
dans lequel le dispositif de commande (100) comprend une mémoire et une unité de traitement des données, une unité d'entrée pour définir la distance centre à centre entre les câbles longitudinaux et une longueur de nappe de renforcement de la bande de roulement, et un logiciel destiné à lire une distance centre à centre définie entre les câbles longitudinaux et la nappe de renforcement de la bande de roulement.

15. Dispositif selon la revendication 14, lorsqu'elle dépend de la revendication 5, dans lequel le logiciel est équipé d'un sous-programme de distance destiné à calculer la distance mutuelle cible entre les bandes à partir de la largeur de bande, la distance centre à centre entre les câbles longitudinaux et la longueur de nappe de renforcement de la bande de roulement prédéfinie, et dans lequel de préférence le logiciel est de plus muni de sous-programmes de commande destinés à faire fonctionner le dispositif de déplacement pour transférer une nappe de renforcement de la bande de roulement partiellement formée, dans lequel le transfert est calculé au moyen du sous-programme de distance permettant de calculer la distance mutuelle entre les bandes.

16. Procédé de production d'une nappe de renforcement de la bande de roulement ayant un axe longitudinal, une longueur de nappe de renforcement de la bande de roulement et des câbles mutuellement parallèles selon un angle prédéfini entre câble et axe longitudinal, dans lequel une bande de caoutchouc continue munie de câbles longitudinaux essentiellement parallèles, d'une largeur de bande définie et d'une distance centre à centre définie entre les câbles longitudinaux entre eux, est produite dans la direction longitudinale au moyen d'un processus d'extrusion, la bande de caoutchouc continue est coupée en bandes selon l'angle de câble, un nombre prédéterminé de bandes avec câbles essentiellement parallèles et adjacentes les unes aux autres selon une distance de bande définie par rapport à l'autre pour former une nappe de renforcement de la bande de roulement ayant une longueur de nappe de renforcement de la bande de roulement prédéfinie, étant placé sur une surface de support, dans lequel la distance mutuelle des bandes est calculée pour obtenir une longueur définie de la nappe de renforcement de la bande de roulement, lorsque la nappe de renforcement de la bande de roulement a atteint la longueur cible de la nappe de renforcement de la bande de roulement, la nappe de renforcement de la bande de roulement est transportée dans la direction longitudinale vers un tambour de confection, et est enroulée sur le tambour de confection, dans lequel une distance centre à centre mutuelle prédéterminée des câbles et la largeur de la bande continue sont définies, la longueur de la nappe de renforcement de la bande de roulement est mesurée pendant la fabrication, et la distance mutuelle des bandes est à chaque fois ajustée pour réaliser une longueur de nappe de renforcement de la bande de roulement prédéfinie, dans lequel l'ajustement de la distance mutuelle des bandes est au maximum la distance centre à centre des câbles, de préférence au maximum 20 % de la distance centre à centre.

17. Procédé selon la revendication 16, dans lequel la distance centre à centre et la longueur cible de la nappe de renforcement de la bande de roulement sont entrées dans un ordinateur muni d'un logiciel de commande, dans lequel le logiciel de commande calcule la distance entre les bandes, et dans lequel de préférence le logiciel de commande régule le transfert d'une partie déjà formée de la nappe de renforcement de la bande de roulement.
